(19) Europäisches Patentamt
European Patent Office
Office européen des brevets

(11) Numéro de publication: **0 062 561**
**B1**

(12) # FASCICULE DE BREVET EUROPEEN

(45) Date de publication du fascicule du brevet: **06.02.85**

(51) Int. Cl.⁴: **G 01 T 1/02**

(21) Numéro de dépôt: **82400525.0**

(22) Date de dépôt: **23.03.82**

(54) **Dosimètre pour les photons X et gamma, pour les rayons alpha et pour les neutrons rapides, utilisable en particulier pour la mesure de fortes doses.**

(30) Priorité: **26.03.81 FR 8106102**

(43) Date de publication de la demande:
**13.10.82 Bulletin 82/41**

(45) Mention de la délivrance du brevet:
**06.02.85 Bulletin 85/6**

(84) Etats contractants désignés:
**BE DE GB IT**

(56) Documents cités:
**FR - A - 2 222 660**
**US - A - 3 086 117**
**US - A - 3 171 026**
**US - A - 3 320 421**

(73) Titulaire: **COMMISSARIAT A L'ENERGIE ATOMIQUE**
**Etablissement de Caractère Scientifique Technique et Industriel, 31/33, rue de la Fédération, F-75015 Paris (FR)**

(72) Inventeur: **Bouffard, Serge, 125, Avenue Roger Salengro, F-92290 Chatenay Malabry (FR)**
Inventeur: **Zuppiroli, Libéro, 16, rue Emile Raspail, F-94110 Arcueil (FR)**

(74) Mandataire: **Mongrédien, André et al, c/o BREVATOME 25, rue de Ponthieu, F-75008 Paris (FR)**

EP 0 062 561 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention a pour objet un dosimètre pour les photons X et gamma, pour les rayons $\alpha$ et pour les neutrons rapides, utilisable en particulier pour la mesure de fortes doses.

De puis quelques années, les utilisations industrielles de l'irradiation, par exemple, l'irradiation des polymères et des produits alimentaires et les installations de stérilisation rendent nécessaire la mesure de fortes doses de rayon gamma. De même, il est indispensable de pouvoir mesurer de fortes doses de rayons gamma pour résoudre certains problèmes de sûreté nucléaire. Enfin, pour prévoir l'endommagement des matériaux utilisés dans l'industrie nucléaire, tels que les matériaux de structure des coeurs et des cuves de réacteurs nucléaires, on soumet ces matériaux à des essais d'irradiation, notamment au moyen de neutrons rapides, ce qui nécessite la mesure de fluence des neutrons rapides et l'analyse des spectres de neutrons pour connaître les doses reçues par ces matériaux lors des essais et corréler les différentes irradiations technologiques entre elles.

Jusqu'à présent, on a utilisé pour la dosimétrie $\gamma$, soit des méthodes calorimétriques, soit des méthodes chimiques basées sur la décomposition d'une solution aqueuse de sulfate de fer. Cependant, ces méthodes présentent l'inconvénient d'être toutes deux relativement difficiles à mettre en oeuvre.

Pour la mesure des doses ou fluence de neutrons rapides, on utilise généralement des détecteurs à activation, cependant ceux-ci sont limités à des gammes d'énergie de neutrons bien particulières et ils se sont montrés de ce fait insuffisants; on a également utilisé plus récemment des dosimètres dits de dommages, par exemple des dosimètres au graphite ou au tungstène qui sont mieux adaptés à la mesure de fortes doses. Néanmoins, ces derniers présentent encore une sensibilité insuffisante.

La présente invention a précisément pour objet un dosimètre qui permet de mesurer de fortes doses de rayons X, de rayons gamma, de rayons $\alpha$ et de neutrons rapides.

Le dosimètre pour les photons X et gamma, pour les rayons $\alpha$ et pour les neutrons rapides, selon l'invention, se caractérise en ce qu'il comprend un élément sensible constitué par un cristal organique conducteur ou semiconducteur de l'électricité.

Grâce à l'utilisation d'un cristal organique conducteur ou semiconducteur, le dosimètre de l'invention présente notamment l'avantage d'avoir une bonne sensibilité, une réponse proche de celle de la cellule vivante puisque l'élément sensible est un matériau organique, et un coefficient de températures raisonnablement bas à la température ambiante. Par ailleurs, il est facile à mettre en oeuvre car il ne nécessite qu'une simple mesure de la résistance du cristal organique irradié pour obtenir la dose totale d'irradiation à laquelle a été soumis ce cristal. De ce fait, les mesures peuvent être effectuées «in situ».

En effet, à la suite de travaux portant sur les effets de l'irradiation sur différents cristaux organiques, on a trouvé que la résistivité de ces cristaux variait avec la dose reçue et que ce phénomène était reproductible sur différents cristaux du même composé. Lorsque de tels cristaux sont irradiés par des photons X et gamma, des particules $\alpha$ ou des neutrons rapides, il se produit des dommages dans le cristal et ces dommages sont cumulables; ainsi, le cristal joue le rôle d'intégrateur. Ces dommages conduisent à une modification de la résistivité électrique du cristal et par mesure de la résistivité du cristal exposé aux rayonnements, on peut en déduire la dose totale d'irradiation à laquelle il a été soumis.

Avantageusement ces cristaux organiques conducteurs ou semiconducteurs sont des complexes à transfert de charges, tels que le complexe tétrathiofulvalène-tétracyanodiméthane, ou des sels d'ion radicalaire tels que le tétrathiotétracène-iode.

Des composés de ce type sont en particulier décrits dans: Annales de Physique, 1976, t.1, n° 4-5, pp 145-256.

A titre d'exemples de cristaux organiques susceptibles d'être utilisés comme élément sensible du dosimètre de l'invention, on peut citer les composés à base de:

-7,7,8,8, tétracyanoquinodiméthane

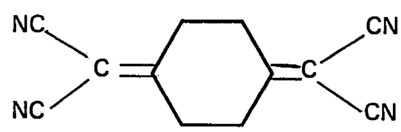

(TCNQ)

-diméthyl-7,7,8,8, tétracyanoquinodiméthane

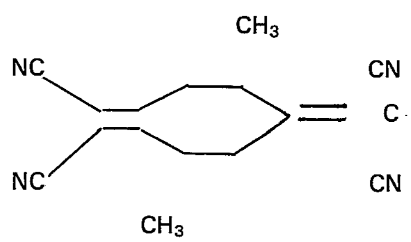

(DMTCNQ)

-tétrathiofulvalène

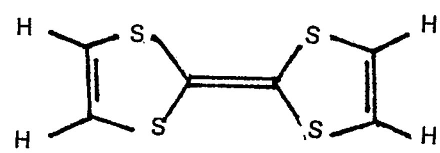

(TTF)

-tétraméthyltétrathiofulvalène

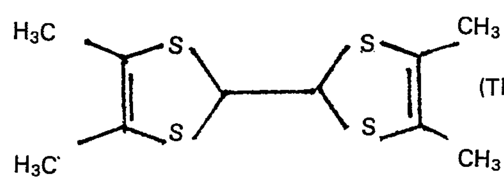

(TMTTF)

-tétrasélénofulvalène

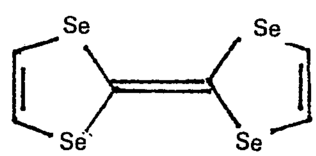

(TSF)

-tétraméthyl tétrasélénofulvalène

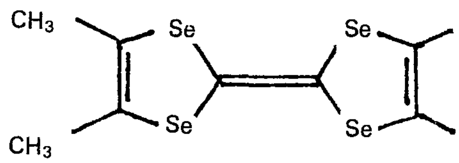

(TMTSF)

par exemple l'hexafluorophosphate de tétraméthyl tétrasélénofulvalène $PF_6$ - $(TMTSF)_2$

-hexaméthyl tétrathiofulvalène

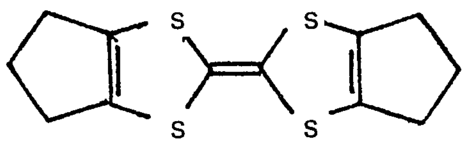

(HMTTF)

-hexaméthyl tétrasélénofulvalène

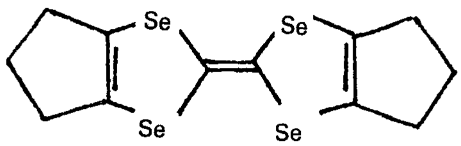

(HMTSF)

-tétrathiotétracène

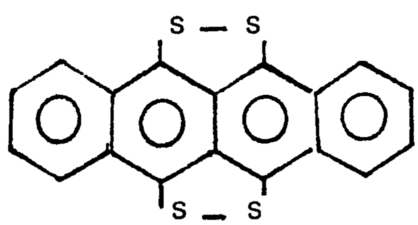

(TTT)

-tétraséléno tétracène

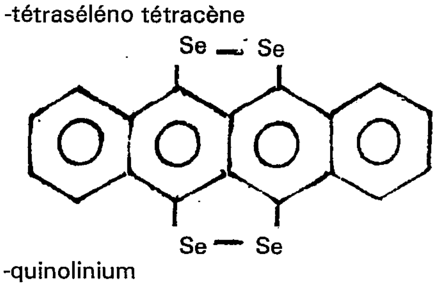

(TST)

-quinolinium

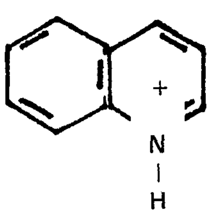

(Qn)

-acridinium

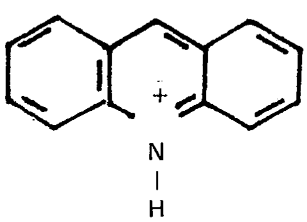

(Ad)

-N méthyl acridinium

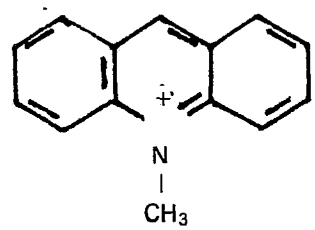

(NMeAd)

-2,3 benzoyl acridinium

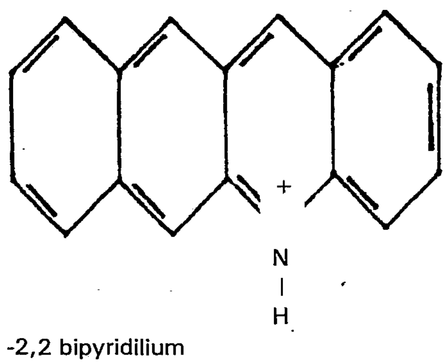

(2,3 B Ad)

-2,2 bipyridilium

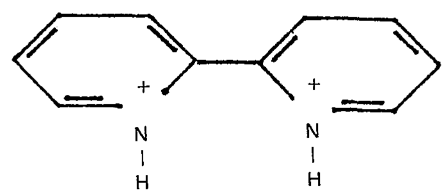

(2-2' BIP)

-tétracyanonaphtoquinodiméthane

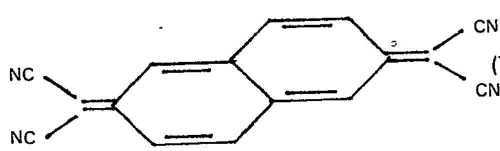

(TNAP)

De préférence, l'élément sensible est constitué par un cristal de tétraméthyl tétrasélénofulvalène-diméthyl tétracyanoquinodiméthane (TMTSF-DMTCNQ), ou de quinolinium-tétracyanoquinodiméthane [Qn $(TCNQ)_2$]. On peut aussi utiliser comme cristal organique des phtalocyanines, par exemple la phtalocyanine de cuivre de formule

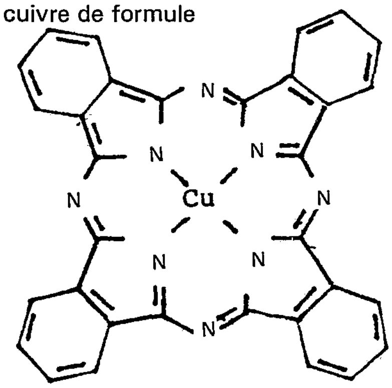

qui présentent l'avantage de pouvoir être utilisées à des températures allant jusqu'à 600-700°C.

De même, l'élément sensible peut être constitué par un polymère conducteur tel que les polyacétylènes dopés, les polyphénylènes ou les polypyrols.

Lorsque le dosimètre doit être utilisé pour des mesures effectuées aux basses énergies, le cristal organique qui constitue l'élément sensible, comprend de préférence des atomes lourds comme le sélénium ou le rhénium, et il peut être constitué par exemple par du perrhéniate de tétraméthylsélénafulvalène ou par le complexe Re $O_4$-$(TMTSF)_2$ tétraméthylsélénafulvalène tétracyanoquinodiméthane. En effet, étant donné que l'augmentation de résistivité du dosimètre ne dépend que de l'énergie absorbée, on augmente notablement l'absorption du dosimètre en utilisant des cristaux contenant des atomes lourds tels que le sélénium et l'iode. Ainsi, le dosimètre peut absorber 5 Mégarads (absorption photoélectrique) alors que l'eau absorbe 1 Mégarad. De ce fait la sensibilité du dosimètre est accrue.

Lorsque le dosimètre doit être utilisé pour des mesures effectuées aux fortes énergies (≈ 1 MeV) le cristal organique qui constitue l'élément sensible, ne contient que des atomes légers tels que l'hydrogène, le carbone et l'azote car l'effet d'absorption photoélectrique diminue notablement; dans ce cas le dosimètre absorbe sensiblement comme l'eau.

A titre d'exemple, on peut utiliser le complexe quinoléine-tétracyanoquinodiméthane $Qn(TCNQ)_2$ qui présente une sensibilité $dR/Rd\varphi$ de 0,2% par Mégarad.

Pour la réalisation des dosimètres de l'invention, on utilise de préférence des cristaux organiques ayant la forme de paillettes monocristallines, dont les dimensions typiques sont par exemple $2 \times 0{,}2 \times 0{,}2$ $mm^3$, on dispose une paillette sur un support approprié, par exemple sur un support tel que ceux utilisés pour la préparation de circuits intégrés, et on forme sur le cristal deux paires de contacts électriques au moyen de laques d'argent, d'or ou de platine. Au cours de l'exposition aux rayonnements, la mesure de la résistance du cristal à partir de laquelle on détermine la dose d'irradiation, est effectuée de façon très simple en reliant la 1ère paire de contacts à un voltmètre électronique dont la résolution est par exemple 1 $\mu$V, et la seconde paire de contacts à une alimentation de courant stabilisé d'une intensité de l'ordre de 100 microampères.

D'autres caractéristiques et avantages de l'invention apparaîtront mieux à la lecture de la description qui suit donnée bien entendu à titre illustratif et non limitatif, en référence au dessin annexé sur lequel:

la figure 1 est un diagramme illustrant l'évolution des résistivités (en coordonnés logarithmiques) longitudinale (courbe I), et transversale (courbe II) et de l'anisotropie (courbe III) d'un cristal organique de TMTSF-DMTCNQ soumis à un rayonnement X de 9 KeV en fonction de la dose absorbée (en roentgen);

la figure 2 est un diagramme représentant l'évolution de la concentration molaire de défauts d'irradiation dans trois dosimètres selon l'invention, en fonction de la dose de rayons X absorbée par l'élément sensible du dosimètre; et

la figure 3 est un diagramme représentant les variations de conductivité de trois dosimètres selon l'invention, en fonction de la dose de neutrons rapides.

Les cristaux organiques utilisés comme éléments sensibles des dosimètres de l'invention sont des conducteurs électriques très anisotropes comme on peut le voir sur la figure 1 qui illustre en coordonnées logarithmiques les variations de la résistivité longitudinale $\rho_b$ (courbe I), de la résistivité transversale $\rho_a$ (courbe II) et de l'anisotropie $k_a = \frac{\rho_a}{\rho_b}$ (courbe III) d'un cristal organique de TMTSF-DMTCNQ sousmis à une irradiation par des rayons X en fonction de la dose absorbée (en roentgen); le rayonnement X utilisé qui correspond à la raie $K\alpha$ de l'anticathode de cuivre, avait une énergie de l'ordre de 9 KeV.

Au vu de cette figure, on voit que les résistivités longitudinale $\rho_b$ et transversale $\rho_a$ varient exponentiellement avec la dose reçue sur un très large domaine.

Ainsi, on remarque que ce conducteur organique à caractère métallique possède des propriétés de transport électronique très anisotropes qui le rendent quasi unidimensionnel; dans de tels conducteurs organiques, la conductivité électrique le long des chaînes peut être de 100 à 1000 fois supérieure à la conductivité électrique transversale. L'irradiation de ces matériaux crée des défauts qui interrompent les chaînes conductrices et forcent les électrons à un «hopping» transversal. Lorsque l'échantillon a reçu une dose $\phi$, la concentration moléculaire c de défauts dûs à l'irradiation s'écrit en fonction des résistivités longitudinale $\rho_b(\Phi)$ et transversale $\rho_a(\Phi)$ le long de l'axe transversal de plus faible anisotropie de la façon suivante:

$$c = \left[\rho_b(\Phi) - \rho_b(o)\right] / \rho_a(\Phi)$$

Sur la figure 2, on a représenté les variations de la concentration molaire c des défauts d'irradiation en fonction de la dose d'irradiation (en Mrd) absorbée par les éléments sensibles de trois dosimètres de l'invention. Ces dosimètres ont été réalisés en disposant des paillettes monocristallines des composés suivants:

— complexe de TMTSF-DMTCNQ,
— complexe TTF-TCNQ et
— sel d'ions radicalaires $TTT_2I_3$,

sur des supports isolants en formant deux paires de contacts électriques sur le cristal au moyen d'une laque d'argent.

Sur cette figure 2, la courbe I se rapporte au dosimètre dont l'élément sensible est un cristal de TMTSF-DMTCNQ, la courbe II au dosimètre dont l'élément sensible est un cristal de TTF-TCNQ et la courbe III au dosimètre dont l'élément sensible est un cristal de $TTT_2I_3$.

Ces dosimètres ont été irradiés au moyen de rayons X, et on a déterminé ensuite les concentrations molaires de défauts: $c = \frac{\Delta\rho_b}{\rho_a}$

Au vu de cette figure, on constate que les concentrations de défauts d'irradiation sont proportionnelles à la dose d'irradiation et ce, jusqu'à des doses supérieures à 2000 Mrd. L'augmentation de résistivité des dosimètres dépend seulement de l'énergie absorbée par l'élément sensible. Parmi les dosimètres testés, les meilleurs résultats ont été obtenus avec le dosimètre dont l'élément sensible est le complexe TMTSF-DMTCNQ (courbe I). Ce dosimètre présente une sensibilité $dR/Rd\Phi = 0{,}64\%$ par Mégaroentgen.

Sur la figure 3, on a représenté les variations de conductivité électrique $(\frac{\sigma}{\sigma o})$ de trois dosimètres de l'invention soumis à une irradiation au moyen de neutrons rapides à une température de 20°K.

Cette irradiation a été effectuée dans un réacteur avec un flux de neutrons rapides de $2{,}5.10^{12}$ nr/cm$^2$.S et un flux $\gamma$ de $10^4$ Rads/s, ce qui est négligeable par rapport au flux de neutrons rapides.

Sur cette figure, la courbe I se rapporte à un dosimètre dont l'élément sensible est un cristal de TMTSF-DMTCNQ, la courbe II à un dosimètre dont l'élement sensible est un cristal de $TTT_2I_3$, et la courbe III à un dosimètre dont l'élément sensible est un cristal de $TST_2I$.

Chacune de ces courbes illustre les variations de conductivité de l'élément sensible du dosimètre en fonction de la dose de neutrons rapides (nr/cm$^2$).

Au vu de ces courbes, on constate que la conductivité $\sigma$ diminue exponentiellement avec la dose de neutrons rapides. Ainsi, ces dosimètres présentent une très bonne sensibilité aux neutrons rapides, qui est de 10 à 100 fois supérieure à celle des détecteurs de dommages au tungstène ou au carbone utilisés actuellement. En effet, dans le cas du dosimètre au TMTSF-DMTCNQ qui est le plus sensible que l'on ait utilisé, la sensibilité aux neutrons rapides est de $2.10^{-15}\%$ par neutron rapide/cm$^2$. De plus, il peut détecter aisément des doses de neutrons rapides de l'ordre de $10^{14}$ neutrons rapides/cm$^2$ alors qu'un détecteur de dommages classiques ne peut pas détecter mieux que $10^{15}$ à $10^{16}$ neutrons rapides/cm$^2$. Enfin, ces dosimètres ont l'avantage d'être beaucoup plus ponctuels car on peut utiliser un élément sensible de très faible surface (environ 1 mm$^2$). Ils permettent des mesures «in situ» et certains d'entre eux tels que le Qn $(TCNQ)_2$ ne s'activent pratiquement pas sous irradiation aux neutrons.

Cependant, ces dosimètres dont l'élément sensible est un complexe à transfert de charge ou un sel d'ion radicalaire, ne peuvent être utilisés longtemps à des températures supérieures à 70°C. Aussi, pour des mesures effectuées à des températures de l'ordre de 600°C, il est préférable d'utiliser des dosimètres dont l'élément sensible est une phtalocyanine.

Bien que sur la figure 2, la courbe I présente une anomalie au début de l'irradiation, on précise que cette anomalie ne se retrouve pas lorsqu'on effectue l'irradiation à température ambiante car on se trouve dans ce cas directement dans le régime exponentiel comme pour les irradiations de la figure 1.

Dans le cas de cette figure, l'anomalie du début d'irradiation provient du fait que la température d'irradiation était de 20°K c'est-à-dire inférieure à la température de transition de phase de Peierls.

Les dosimètres de l'invention ont été testés entre 4 et 360°K, et on a trouvé qu'ils possédaient une bonne sensibilité dans cette gamme. Les lois de variations de la résistivité avec le dommage dû à l'irradiation sont très simples, presque toujours exponentielles en fonction de la dose reçue. A titre d'exemple, on peut obtenir les sensibilités suivantes avec certains dosimètres de l'invention:

a) pour les rayons X une augmentation de résistivité de 6,4% pour une dose de 10 Mroëntgen, dans le cas du dosimètre dont l'élément sensible est un cristal de TMTST-DMTCNQ,
b) pour les neutrons rapides, une augmentation de résistivité de 2% pour une fluence de $10^{15}$ neutrons rapides/cm$^2$ dans le cas du dosimètre dont l'élément sensible est un cristal de TMTSF-DMTCNQ.
c) pour le rayonnement gamma une augmentation de résistivité de 2% pour une énergie absorbée de 10 Mrads dans le cas du dosimètre dont l'élément sensible est un cristal de Qn $(TCNQ)_2$.

Les dosimètres de l'invention peuvent être utilisés également pour la dosimérrie alpha. Dans ce cas l'élément sensible du dosimètre doit avoir une épaisseur inférieure au parcours moyen du rayonnement alpha. A titre d'exemple, on décrit ci-après une méthode de dosimétrie $\alpha$ utilisant ces dosimètres pour déterminer la teneur en plutonium de combustibles nucléaires. Dans ce cas, on met en contact le dosimètre dont l'élément sensible a une épaisseur très faible avec du plutonium et l'on détermine la résistivité du dosimètre à plusieurs reprises pour déterminer la pente de la courbe obtenue en portant la résistivité de l'élément en coordonnées logarithmiques en fonction de la dose de rayonnement $\alpha$ absorbée.

On met ensuite en contact le dosimètre avec un échantillon de combustible nucléaire, par exemple de bioxyde d'uranium et de plutonium, et l'on mesure également sa résistivité à plusieurs reprises afin de déterminer la nouvelle pente de la courbe représentant les variations de la résistivité en fonction de la dose absorbée.

Ainsi on peut déterminer la teneur en plutonium du combustible, qui correspond au rapport des pentes entre les deux courbes.

**Revendications**

1. Dosimètre pour les photons X et gamma, pour les rayons $\alpha$ et pour les neutrons rapides, caractérisé en ce qu'il comprend un élément sensible constitué par un cristal organique conducteur ou semiconducteur de l'électricité.

2. Dosimètre selon la revendication 1, caractérisé en ce que le cristal organique est un complexe à transfert de charge ou un sel d'ion radicalaire.

3. Dosimètre selon l'une quelconque des revendications 1 et 2, pour la mesure aux basses énergies, caractérisé en ce que le cristal organique contient des atomes lourds.

4. Dosimètre selon la revendication 3, caractérisé en ce que les atomes lourds sont le sélénium ou l'iode.

5. Dosimètre selon la revendication 1, caractérisé en ce que l'élément sensible est un cristal de quinolinium-tétracyanoquinodiméthane $[Qn(TCNQ)_2]$.

6. Dosimètre selon la revendication 1, caractérisé en ce que l'élément sensible est un cristal de tétraméthyl-tétrasélénofulvalènediméthyltétracyanoquinodiméthane (TMTSF-DMTCNQ).

**Claims**

1. Dosimeter for X- and gamma-photons, for alpha-rays and for fast neutrons, characterized in that it comprises a sensitive element constituted by an electrically-conducting or -semiconducting organic crystal.

2. Dosimeter according to Claim 1, characterized in that the organic crystal is a charge-transfer complex or a salt with a radical ion.

3. Dosimeter according to either of Claims 1 and 2, for measurement at low energies, characterized in that the organic crystal contains heavy atoms.

4. Dosimeter according to Claim 3, characterized in that the heavy atoms are selenium or iodine.

5. Dosimeter according to Claim 1, characterized in that the sensitive element is a crystal of quinolinium-tetracyanoquinodimethane [$Qn(TCNQ)_2$].

6. Dosimeter according to Claim 1, characterized in that the sensitive element is a crystal of tetramethyl-tetraselenofulvalenedimethyltetracyanoquinodimethane (TMTSF-DMTCNQ).

**Patentansprüche**

1. Dosimeter für Röntgen- und Gammastrahlen, für Alphastrahlen und für schnelle Neutronen, dadurch gekennzeichnet, dass es ein Sensorelement enthält, das von einem elektrisch leitenden oder halbleitenden organischen Kristall gebildet ist.

2. Dosimeter nach Anspruch 1, dadurch gekennzeichnet, dass das organische Kristall ein Ladungsübertragungskomplex oder ein Salz eines radikalischen Ions ist.

3. Dosimeter nach einem der Ansprüche 1 und 2 für die Messung niedriger Energien, dadurch gekennzeichnet, dass das organische Kristall Schweratome enthält.

4. Dosimeter nach Anspruch 3, dadurch gekennzeichnet, dass die Schweratome Selen oder Jod sind.

5. Dosimeter nach Anspruch 1, dadurch gekennzeichnet, dass das Sensorelement ein Chinoliniumtetracyanchinodimethan-Kristall ist [$Qn(TCNQ)_2$].

6. Dosimeter nach Anspruch 1, dadurch gekennzeichnet, dass das Sensorelement ein Tetramethyl-tetraselenofulvalendimethyltetracyanchinodimethan-Kristall ist (TMTSF-DMTCNQ).

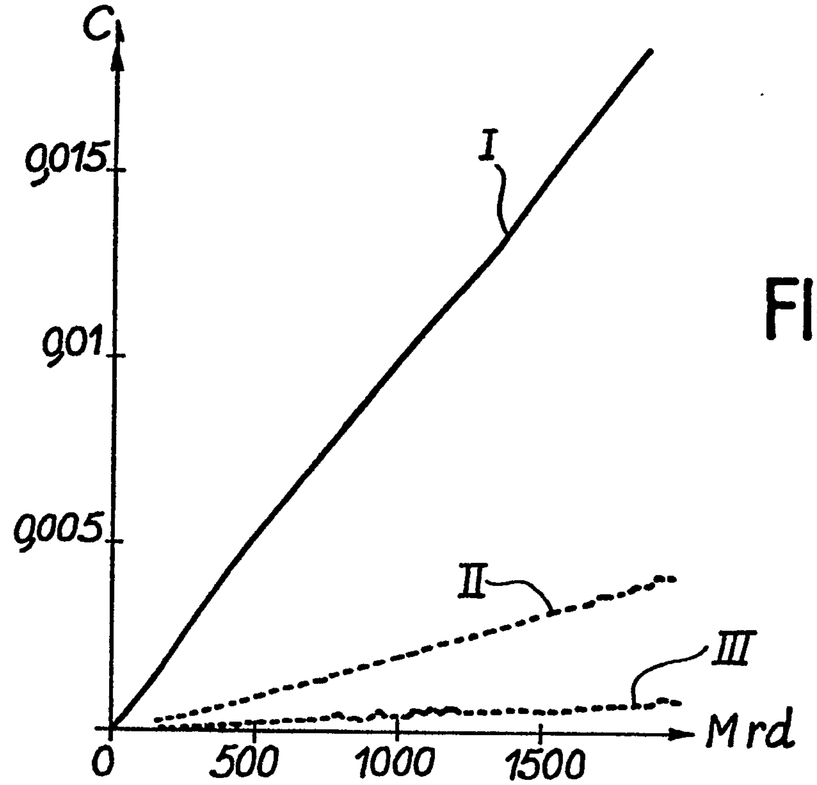
C
0,015
0,01
0,005
I
II
III
0
500
1000
1500
Mrd

FIG. 2

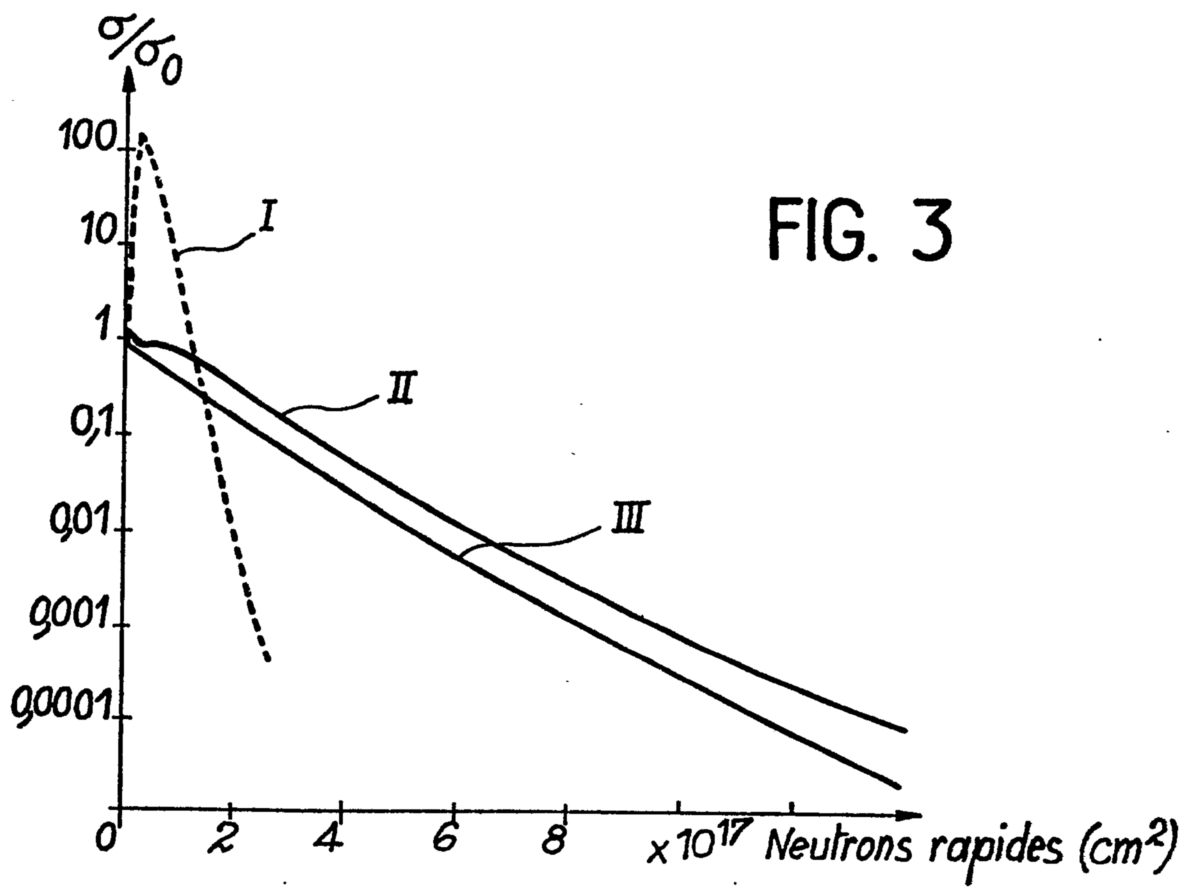
σ/σ0
100
10
1
0,1
0,01
0,001
0,0001
I
II
III
0
2
4
6
8
x10^17 Neutrons rapides (cm^2)

FIG. 3

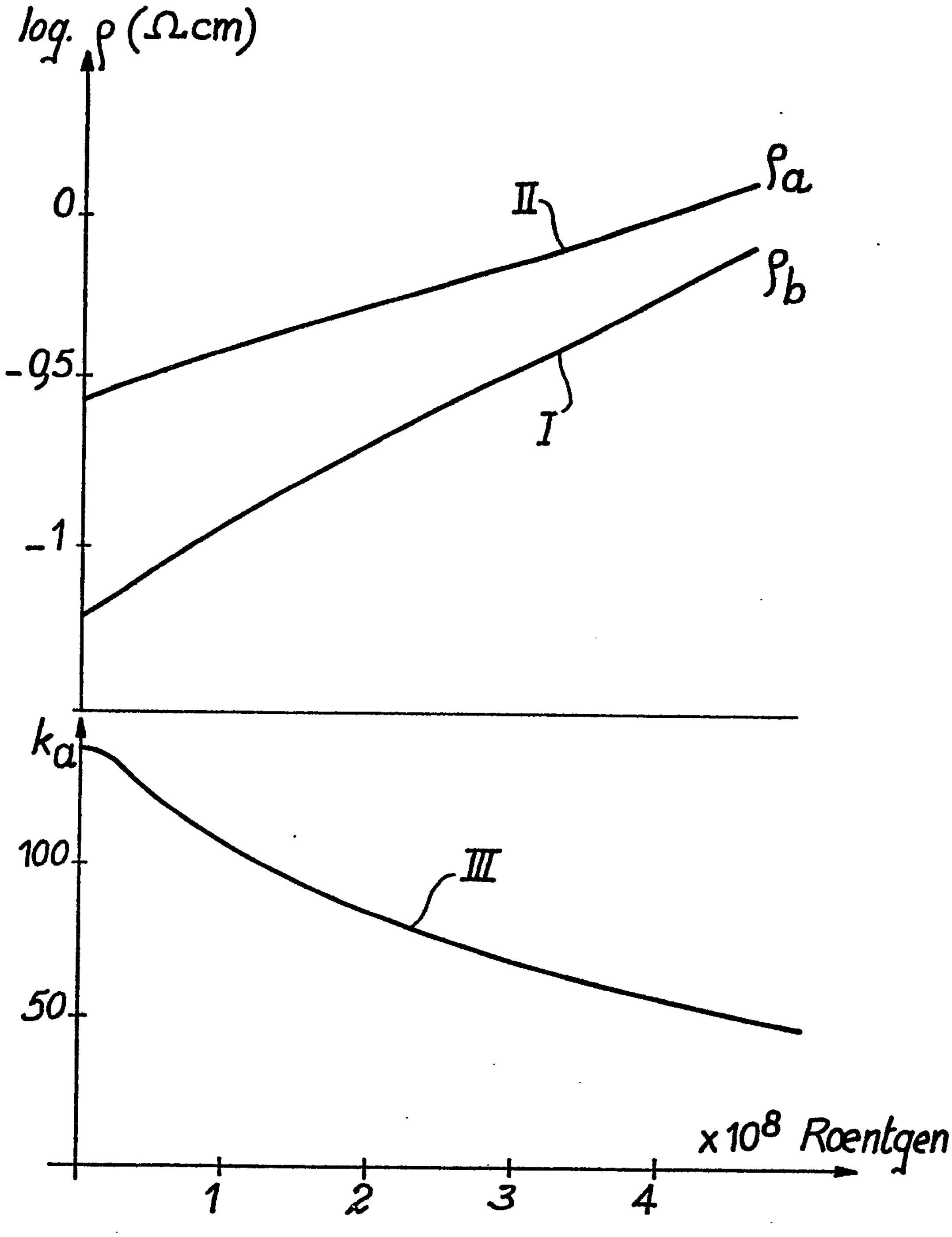


FIG. 1